# EUROPEAN PATENT SPECIFICATION

(11) **EP 2 612 818 B1**
(45) Date of publication and mention of the grant of the patent: **09.07.2014**
(21) Application number: 12199689.6
(22) Date of filing: 28.12.2012
(51) Int. Cl.: B65B 5/10, B65B 37/02

(54) **A method for realising at least a supply channel of tablets in a support of a unit for release of tablets, a unit for releasing of tablets and use of a slot miller for releasing at least a supply channel of tablets in a support for a unit for releasing tablets**
Verfahren zur Umsetzung von mindestens einem Tablettenzuführungskanal auf einem Träger für eine Einheit zur Freigabe von Tabletten, Einheit zur Freigabe von Tabletten und Verwendung einer Schlitzfräse zur Freigabe von mindestens einem Tablettenzuführungskanal auf einem Träger für eine Einheit zur Freigabe von Tabletten
Procédé de mise en oeuvre d'au moins un canal d'alimentation de comprimés dans un support d'unité de libération de comprimés, unité permettant de libérer des comprimés et utilisation d'une fraiseuse de rainures pour libérer au moins un canal d'alimentation de comprimés dans un support pour unité permettant de libérer des comprimés

(30) Priority: 09.01.2012 IT BO20120008
(43) Date of publication of application: 10.07.2013
(73) Proprietor: Marchesini Group S.p.A., 40065 Pianoro (Bologna) (IT)
(72) Inventor: Monti, Giuseppe, 40065 Pianoro (Bologna) (IT)
(74) Representative: Dall'Olio, Christian

(56) References cited:
- US-A- 3 759 011

## Description

The present invention relates to the technical sector concerning supports which form supply channels through which tablets can transit; these tablets, for example, can be subsequently released internally of the cells of a celled strip which is subsequently sealed and cut such as to form a blister pack of tablets.

In particular, the invention relates to a method for realising at least a supply channel of tablets in a support of a unit for release of tablets, to a unit for release of tablets and to a use of a slot miller for realising at least a supply channel of tablets in a support of a unit for release of tablets.

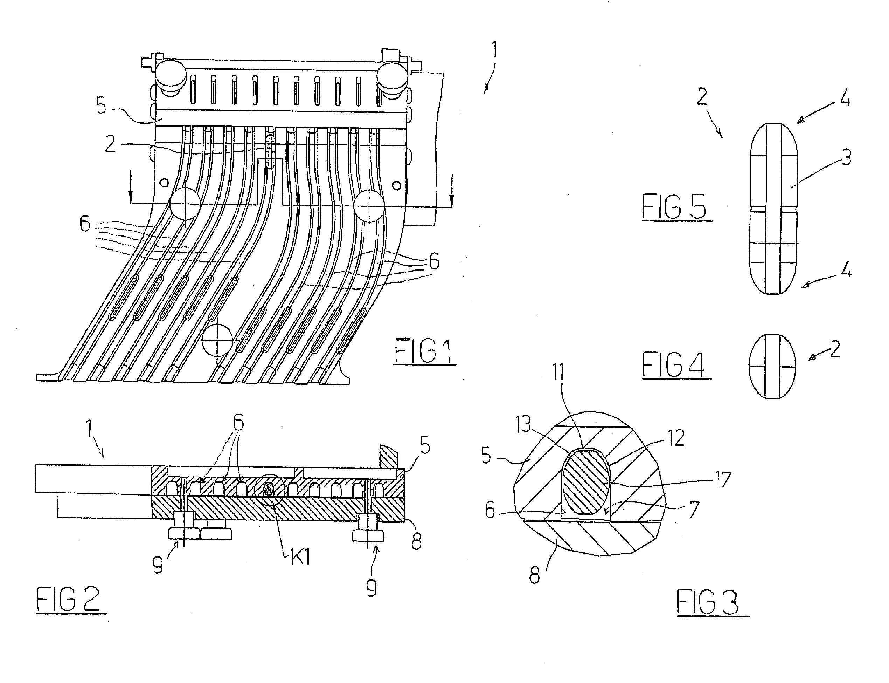

Figures 1, 2 illustrate a unit (1) for releasing tablets (2), of known type.

The unit (1) comprises a support (5) which conforms at least a supply channel (6) of tablets (2). Each supply channel (6) of tablets (2) exhibits a transversal section that is practically constant, exhibits an opening (7) which develops along the relative length thereof and is conformed such as to embrace the transiting tablets (2).

The tablets (2) which are used are generally oval in shape.

In the example illustrated in figures 4, 5, the table is oblong and has a longitudinal axis; further, it exhibits a longitudinal plane of symmetry, which contains the longitudinal axis, and a transversal plane of symmetry which is perpendicular to the longitudinal plane of symmetry. This tablet has a main body (3) and two identical ends (4); the main body has a constant transversal section and a maximum area (17). It could be said that the transversal section of maximum area (17) has a profile that can contain the profile of all the other transversal sections of the tablet (2), which is the present example are the transversal sections of the relative end (4). This means that the projection on a perpendicular plane to the longitudinal axis of the tablet of the of the profile of the transversal section of maximum area (17) includes all the other projections, on the same perpendicular plane to the longitudinal axis of the tablet, of the remaining profiles of the transversal sections of the tablet.

Further, the transversal section of maximum area (17) has two axes of symmetry, one which lies on the longitudinal plane of symmetry and the other which lies on the transversal plane of symmetry.

Each supply channel (6) of tablets is usually obtained by milling.

The supply channel (6) of tablets forms, in particular: a main wall (11); a first lateral wall (12) which is connected to the main wall (11); a second lateral wall (13) which is connected to the main wall (11) and which is opposite the first lateral wall (12).

Thereafter, the supply channels (6) of tablets are laterally closed, i.e. on the side of the relative openings (7), by means of a transparent panel (8) (figure 2) which is fixed by fixing means (9) to the support (5). The transparent panel (8) has not been illustrated in figure 1 in order better to show the supply channels (6) of tablets (2).

The shapes of tablets are progressively becoming more complex, while still maintaining some basic geometrical characteristics. As a consequence it can happen that a tablet might rotate anomalously along the supply channel and get blocked internally thereof, forming a cap which blocks the transit of the tablets that follow; the operator is thus forced to halt the production line, remove the transparent panel (8) and extract the tablet which has caused the blockage. This operation obviously requires a certain amount of time and can lead to wasting of some treated products along the production line, for example a portion of celled strip already containing a certain number of tablets.

Document US 3759011 discloses a machine for packaging articles of uniform size, such as pharmaceutical tablets, in a blister type package. Such machine comprises feed devices and in the form of chutes which are disposed to receive articles at their upper ends exiting slots and allow them to drop to the position where they are inserted in the blisters. Each device is constructed of a rectangular stainless steel bar carryin a T-slot running from the upper end of the device and to a point a short distance from its lower end. T-slots are of a size just receiving the articles to be packaged, such that articles can slide down slots, one resting on top of the other. The open portion of each slot is narrow enough to prevent articles from falling out of feed devices and yet is wide enough to admit stop pins and the like where it is desired to prevent flow in a particular device or in all the devices.

The aim of the present invention consists in obviating the above-described drawbacks.

The above aim has been attained with a unit for releasing tablets in accordance with claim 1, with a method for realising at least a supply channel of tablets in a support of a unit for release of tablets, in accordance with claim 2 and by using a slot miller for realising at least a supply channel of tablets in a support of a unit for release of tablets in accordance with claim 3.

Each tablet is advantageously constantly guided by the supply channel of tablets during the transit thereof internally of the supply channel of tablets; each tablet has a transversal section of maximum area a profile of which completely brushes the walls of the supply channel, and it is therefore not possible for the tablet to rotate anomalously during transit thereof along the supply channel of tablets. It is therefore no longer possible for a tablet to form an obstruction along the supply line.

Further, the use of a slot miller leads to forming a lateral opening of small dimension, such that a tablet cannot exit laterally from the supply channel through the opening; therefore the use of a transparent closing panel becomes superfluous and it is thus possible for an operator to intervene immediately on the supply channel should the improbable situation of an obstruction or the like occur in the supply channel.

Specific embodiments of the invention will be described in the following part of the present description, according to what is set out in the claims and with the aid of the accompanying tables of drawings, in which:
- figure 1 is a lateral view of a release unit of tablets of known type;
- figure 2 is a view of section II-II of figure 1;
- figure 3 is a view of enlarged-scale detail K1 of figure 2;
- figures 4, 5 are respectively a front and lateral view in enlarged scale of a first type of tablet;
- figure 6 is a lateral view of a unit for release of tablets according to a first embodiment of the invention;
- figure 7 is a view of section VII-VII of figure 6;
- figure 8 is a front view in enlarged scale of a second type of tablet;
- figure 9 is a view of detail K2 in enlarged view of figure 7;
- figure 10 is a lateral view of a unit for release of tablets in accordance with a second embodiment of the invention;
- figure 11 is the view along section XI-XI of figure 10;
- figure 12 is a front view in enlarged scale of a third type of tablet;
- figure 13 is a view in enlarged scale of enlarged detail K3 of figure 11.

With reference to the accompanying tables of drawings, general reference numeral (10) is a unit for release of tablets (2).

These tablets (2), for example, can be subsequently released internally of the cells of an underlying celled strip (not illustrated) which is subsequently sealed and cut to form a blister pack of tablets (2).

The unit (1) comprises a support (5) which forms a plurality of supply channels (6) of tablets (2). Each supply channel (6) of tablets (2) exhibits a practically-constant transversal section (16) along the length thereof and is conformed such as to embrace the transiting tablets (2).

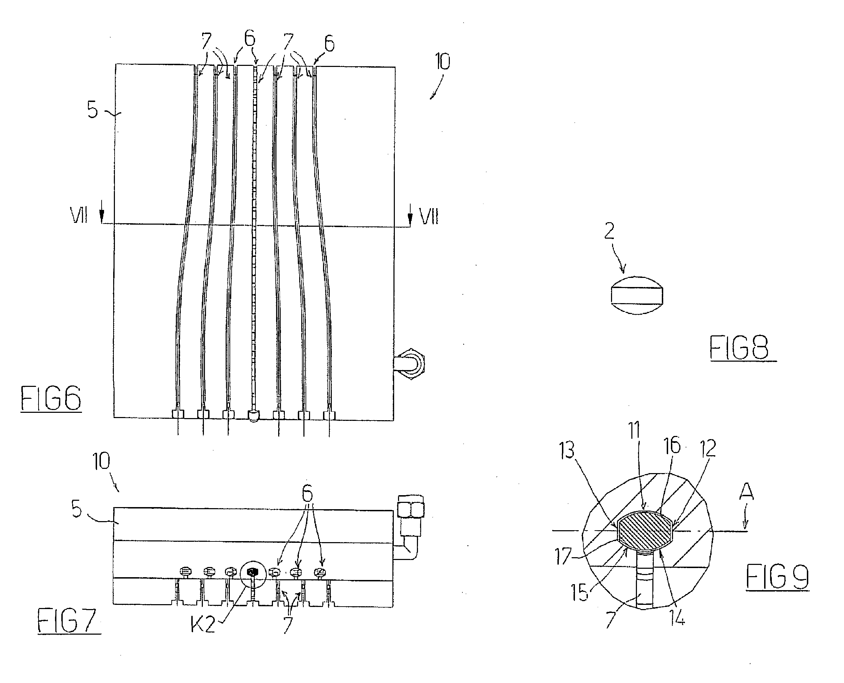

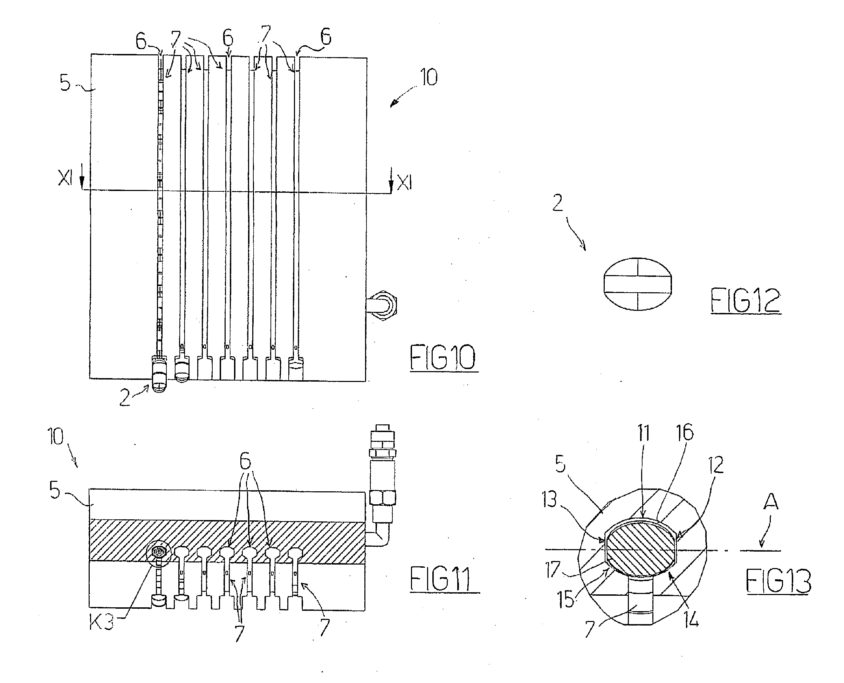

Figures 4, 5 illustrate a first type of tablet (2), while figures 8 and 12 illustrate respectively a second and a third type of tablet (2).

In general terms, the invention is usable with tablets (2) each having a longitudinal axis and a transversal section (17) of maximum area which has a profile that can contain the profile of all the other transversal sections of the tablet (2) and which has an axis of symmetry (A) which divides the transversal section (17) of maximum area into two equal parts.

This is to say that the projection onto a plane perpendicular to the longitudinal axis of the tablet (2) of the profile of the transversal section of maximum area (17) includes all the other projections, on the perpendicular plane to the longitudinal axis of the tablet, of the remaining profiles of the transversal sections of the tablet (2).

The supply channel (6) forms a main wall (11); a first lateral wall (12) which is connected to the main wall (11); a second lateral wall (13) which is connected to the main wall (11) and which is opposite the first lateral wall (12); a first auxiliary wall (14) which is connected to the first lateral wall (21) and which is opposite the main wall (11); and a second auxiliary wall (15) which is connected to the second lateral wall (13) and which is opposite the main wall (11).

The first auxiliary wall (14) and the second auxiliary wall (15) delimit the opening (7).

The main wall (11), the main lateral wall (12), the second lateral wall (13), the first auxiliary wall (14) and the second auxiliary wall (15) are conformed such that the transversal section (16) of the supply channel (6) exhibits a profile having the same shape as the profile of the transversal section (17) of maximum area of the tablet (2), such that the tablet (2) is guided along the supply channel (6).

The unit (10) and the tablets (2) cited above form a group.

Figures 6, 7 illustrate a first embodiment of the unit (10), while figures 10, 11 illustrate a second embodiment of the unit (10); these embodiments are distinguished from one another essentially by the different shape of the supply channels (6) which in turn are designed according to the shape of the tablets (2) which can slide along the supply channels (6) and the arrangement that the tablets (2) have to assume inside the cells of the underlying celled strip.

The present invention further defines a method for realising at least a supply channel (6) of tablets (2) in a support (5) of a unit (10) for releasing tablets (2). The method comprises a step of realising, by milling, at least a supply channel (6) of tablets (2) in the support (5) of the unit (6) for releasing tablets (2), such that the supply channel (6) of tablets (2): exhibits a constant transversal section; exhibits an opening (7) which develops along the relative length thereof; is conformed such as to embrace the tablets (2) in transit; and forms a main wall (11), a first lateral wall (12) which is connected to the main wall (11), a second lateral wall (13) which is connected to the main wall (11) and which is opposite the first lateral wall (12).

In particular, the milling is done using a slot miller (not illustrated) comprising a stalk and a head having a cutting profile which is similar to the external profile of one of the two identical parts of the transversal section (17) of maximum area.

The milling is done in such a way that the supply channel (6) obtained also forms: a first auxiliary wall (14) which is connected to the first lateral wall (12) and which is opposite the main wall (11); and a second auxiliary wall (15) which is connected to the second lateral wall (13) and which is opposite the main wall (11); the first auxiliary wall (14) and the second auxiliary wall (15) delimiting the opening (7). Further, the milling is performed in such a way that: the transversal section (16) of the supply channel (6) exhibits a profile having the same shape as the profile of the transversal section (17) of maximum area of the tablet (2), such that the tablet (2) is guided along the supply channel (6).

Each tablet (2) is thus constantly guided by the supply channel (6) of tablets (2) during transit thereof internally of the supply channel (6) of tablets (2); each tablet (2) has a transversal section (17) of maximum area a profile of which brushes the walls of the supply channel (6) and therefore it is no longer possible for it to rotate anomalously during transit thereof along the supply channel (6) of tablets (2). It is therefore no longer possible for a tablet (2) to form an obstacle along the supply channel (6).

Further, the use of a slot miller leads to the formation of a lateral opening (7) of small dimensions, such that a tablet (2) cannot exit laterally from the supply channel (6) through the opening (7); thus the use of a transparent closing panel becomes superfluous and thus it is possible for an operator to intervene immediately on the supply channel (6) in the case, by now very improbable, that a blockage is caused or the like in the supply channel (6). Further, this constructional solution simplifies and accelerates the cleaning and hygienising operations of the support (5).

The invention further defines a use of a slot miller, having the above-described characteristics, for realising at least a supply channel (6) of tablets (2) in a support (5) of a unit (10) for release of tablets (2).

The above has been described by way of non-limiting example, and any eventual constructional variants are understood to fall within the protective scope of the present technical solution, as claimed in the following.

## Claims

1. A unit (10) for releasing tablets (2) having a longitudinal axis and a transversal section (17) having a maximum area which has a profile that can contain the profile of all the other transversal sections of the tablet (2) and which has an axis of symmetry (A) that divides the transversal section (17) of maximum area into two equal parts, the unit (10) comprising:
a support (5) which conforms at least a supply channel (6) of tablets (2), exhibits a transversal section that is practically constant, exhibits an opening (7) which develops along the relative length thereof and is conformed such as to embrace the transiting tablets (2);
the supply channel (6) conforming, in particular: a main wall (11); a first lateral wall (12) which is connected to the main wall (11); a second lateral wall (13) which is connected to the main wall (11) and which is opposite the first lateral wall (12); a first auxiliary wall (14) which is connected to the first lateral wall (12) and which is opposite the main wall (11); and a second auxiliary wall (15) which is connected to the second lateral wall (13) and which is opposite the main wall (11); the first auxiliary wall (14) and the second auxiliary wall (15) delimiting the opening (7);
the unit (10) being **characterised in that**:
the supply channel (6) of tablets (2) is obtained by means of milling, the milling being performed by using a slot miller comprising a shank and a head having a cutting profile which is alike to the external profile of one of the two above-cited equal parts of the transversal section (17) of maximum area;
the main wall (11), the first lateral wall (12), the second lateral wall (13), the first auxiliary wall (14) and the second auxiliary wall (15) are conformed such that the transversal section (16) of the supply channel (6) exhibits a profile having the same shape as the profile of the transversal section (17) of maximum area of the tablet (2), such that the tablet (2) is guided along the supply channel (6).

2. A method for realising at least a supply channel (6) of tablets (2) in a support (5) of a unit (10) for releasing tablets (2), each tablet (2) having a longitudinal axis and a transversal section (17) of maximum area which has a profile that can contain the profile of all the other transversal sections of the tablet (2) and which has an axis of symmetry (A) that divides the transversal section (17) of maximum area into two equal parts, the method comprising steps of:
realising at least a supply channel (6) of tablets (2) in a support (5) of a unit (10) for releasing tablets (2), such that the supply channel (6) of tablets (2) exhibits a transversal section that is practically constant, exhibits an opening (7) which develops along the relative length thereof, is conformed such as to embrace the transiting tablets (2), and conforms a main wall (11); a first lateral wall (12) which is connected to the main wall (11); a second lateral wall (13) which is connected to the main wall (11) and which is opposite the first lateral wall (12); a first auxiliary wall (14) which is connected to the first lateral wall (12) and which is opposite the main wall (11); and a second auxiliary wall (15) which is connected to the second lateral wall (13) and which is opposite the main wall (11); the first auxiliary wall (14) and the second auxiliary wall (15) delimiting the opening (7);
the method being **characterised in that**:
the supply channel (6) is realized by milling, the milling being performed using a slot miller comprising a shank and a head having a cutting profile which is alike to the external profile of one of the two above-cited equal parts of the transversal section (17) of maximum area,
such that the transversal section (16) of the supply channel (6) exhibits a profile having the same shape as the shape of the profile of the transversal section (17) of maximum area of the tablet (2), such that the tablet (2) is guided along the supply channel (6).

3. Use of a slot miller for realising at least a supply channel (6) of tablets (2) in a support (5) of a unit (10) for release of tablets (2), each tablet (2) having a longitudinal axis and a transversal section (17) of maximum area which has a profile that can contain the profile of all the other transversal sections of the tablet (2) and which has an axis of symmetry (A) that divides the transversal section (17) of maximum area into two equal parts, the slot miller comprising a shank and a head having a cutting profile which is alike to the external profile of one of the two above-cited equal parts of the transversal section (17) of maximum area,
such that the supply channel (6) of tablets (2):
exhibits a transversal section that is practically constant: exhibits an opening (7) that develops along the relative length thereof; is conformed such as to embrace the transiting tablets (2); and conforms a main wall (11), a first lateral wall (12) that is connected to the main wall (11), a second lateral wall (13) that is connected to the main wall (11) and that is opposite the first lateral wall (12); a first auxiliary wall (14) that is connected to the first lateral wall (12) and that is opposite the main wall (11); and a second auxiliary wall (15) that is connected to the second lateral wall (13) and that is opposite the main wall (11); the first auxiliary wall (14) and the second auxiliary wall (15) delimiting the opening (7);
and such that the transversal section (16) of the supply channel (6) exhibits a profile having the same shape as the profile of the transversal section (17) of maximum area of the tablets (2), such that the tablet (2) is guided along the supply channel (6).

## Patentansprüche

1. Einheit (10) zur Freigabe von Tabletten (2), die eine Längsachse und einen Querschnitt (17) von maximaler Fläche aufweist, dessen Profil das Profil aller anderen Querschnitte der Tablette (2) enthalten kann, und welcher eine Symmetrieachse (A) aufweist, die den Querschnitt (17) maximaler Fläche in zwei gleiche Teile aufteilt, wobei die Einheit (10) Folgendes beinhaltet:
einen Träger (5), der zumindest einen Zuführungskanal (6) für Tabletten (2) bildet, wobei dieser Zuführungskanal (6) einen nahezu konstanten Querschnitt aufweist, eine Öffnung (7) aufweist, die sich entlang seiner relativen Länge erstreckt, und derart geformt ist, dass er die durchlaufenden Tabletten (2) umfasst;
wobei der Zuführungskanal (6) insbesondere Folgendes bildet: eine Hauptwand (11); eine erste Seitenwand (12) die mit der Hauptwand (11) verbunden ist; eine zweite Seitenwand (13), die mit der Hauptwand (11) verbunden ist und die der ersten Seitenwand (12) gegenüberliegt; eine erste Hilfswand (14), die mit der ersten Seitenwand (12) verbunden ist und der Hauptwand (11) gegenüberliegt; und eine zweite Hilfswand (15), die mit der zweiten Seitenwand (13) verbunden ist und der Hauptwand (11) gegenüberliegt; wobei die erste Hilfswand (14) und die zweite Hilfswand (15) die Öffnung (7) begrenzen;
wobei die Einheit (10) **dadurch gekennzeichnet ist, dass**:
der Zuführungskanal (6) für Tabletten (2) durch Fräsen erhalten wird, wobei das Fräsen unter Verwendung eines Schaftfräsers zum Langlochfräsen erfolgt, der einen Schaft und einen Fräskopf aufweist, dessen Schneidprofil dem Außenprofil von einem der zwei oben genannten gleichen Teile des Querschnitts (17) maximaler Fläche ähnelt;
die Hauptwand (11), die erste Seitenwand (12), die zweite Seitenwand (13), die erste Hilfswand (14) und die zweite Hilfswand (15) derart geformt sind, dass der Querschnitt (16) des Zuführungskanals (6) ein Profil aufweist, das dieselbe Form wie das Profil des Querschnitts (17) maximaler Fläche der Tablette (2) besitzt, so dass die Tablette (2) entlang des Zuführungskanals (6) geführt wird.

2. Verfahren zur Herstellung zumindest eines Zuführungskanals (6) für Tabletten (2) auf einem Träger (5) einer Einheit (10) zur Freigabe von Tabletten (2), wobei jede Tablette (2) eine Längsachse und einen Querschnitt (17) von maximaler Fläche aufweist, dessen Profil das Profil aller anderen Querschnitte der Tablette (2) enthalten kann, und welcher eine Symmetrieachse (A) aufweist, die den Querschnitt (17) maximaler Fläche in zwei gleiche Teile aufteilt, wobei das Verfahren folgende Schritte beinhaltet:
Herstellen zumindest eines Zuführungskanals (6) für Tabletten (2) auf einem Träger (5) einer Einheit (10) zur Freigabe von Tabletten (2), so dass der Zuführungskanal (6) für Tabletten (2): einen nahezu konstanten Querschnitt aufweist; eine Öffnung (7) aufweist,
die sich entlang seiner relativen Länge erstreckt; derart geformt ist, dass er die durchlaufenden Tabletten (2) umfasst; und eine Hauptwand (11), eine erste Seitenwand (12), die mit der Hauptwand (11) verbunden ist, eine zweite Seitenwand (13), die mit der Hauptwand (11) verbunden ist und der ersten Seitenwand (12) gegenüberliegt; eine erste Hilfswand (14) die mit der ersten Seitenwand (12) verbunden ist und der Hauptwand (11) gegenüberliegt; und eine zweite Hilfswand (15), die mit der zweiten Seitenwand (13) verbunden ist und der Hauptwand (11) gegenüberliegt; wobei die erste Hilfswand (14) und die zweite Hilfswand (15) die Öffnung (7) begrenzen;
wobei das Verfahren **dadurch gekennzeichnet ist, dass**:
der Zuführungskanal (6) durch Fräsen hergestellt wird, wobei das Fräsen unter Verwendung eines Schaftfräsers zum Langlochfräsen erfolgt, der einen Schaft und einen Fräskopf aufweist, dessen Schneidprofil dem Außenprofil von einem der zwei oben genannten gleichen Teile des Querschnitts (17) maximaler Fläche ähnelt,
so dass der Querschnitt (16) des Zuführungskanals (6) ein Profil aufweist, das dieselbe Form wie die Form des Profils des Querschnitts (17) maximaler Fläche der Tablette (2) besitzt, so dass die Tablette (2) entlang des Zuführungskanals (6) geführt wird.

3. Verwendung eines Schaftfräsers zur Herstellung von zumindest einem Zuführungskanal (6) für Tabletten (2) auf einem Träger (5) einer Einheit (10) zur Freigabe von Tabletten (2), wobei jede Tablette (2) eine Längsachse und einen Querschnitt (17) von maximaler Fläche aufweist, dessen Profil das Profil aller anderen Querschnitte der Tablette (2) enthalten kann, und welcher eine Symmetrieachse (A) aufweist, die den Querschnitt (17) maximaler Fläche in zwei gleiche Teile aufteilt, wobei ferner der Schaftfräser einen Schaft und einen Fräskopf aufweist, dessen Schneidprofil dem Außenprofil von einem der zwei oben genannten gleichen Teile des Querschnitts (17) maximaler Fläche ähnelt, so dass der Zuführungskanal (6) für Tabletten (2):
einen nahezu konstanten Querschnitt aufweist; eine Öffnung (7) aufweist, die sich entlang seiner relativen Länge erstreckt; derart geformt ist, dass er die durchlaufenden Tabletten (2) umfasst; und eine Hauptwand (11), eine erste Seitenwand (12), die mit der Hauptwand (11) verbunden ist, eine zweite Seitenwand (13), die mit der Hauptwand (11) verbunden ist und der ersten Seitenwand (12) gegenüberliegt; eine erste Hilfswand (14) die mit der ersten Seitenwand (12) verbunden ist und der Hauptwand (11) gegenüberliegt; und eine zweite Hilfswand (15), die mit der zweiten Seitenwand (13) verbunden ist und der Hauptwand (11) gegenüberliegt bildet; wobei die erste Hilfswand (14) und die zweite Hilfswand (15) die Öffnung (7) begrenzen;
und so dass der Querschnitt (16) des Zuführungskanals (6) ein Profil aufweist, das dieselbe Form wie das Profil des Querschnitts (17) maximaler Fläche der Tabletten (2) besitzt, so dass die Tablette (2) entlang des Zuführungskanals (6) geführt wird.

## Revendications

1. Une unité (10) permettant de libérer des comprimés (2) ayant un axe longitudinal et une section transversale (17) de superficie maximale qui a un profil qui peut contenir le profil de toutes les autres sections transversales du comprimé (2) et qui a un axe de symétrie (A) qui divise ladite section transversale (17) de superficie maximale en deux parties égales, l'unité (10) comprenant :
un support (5) qui conforme au moins un canal (6) d'alimentation de comprimés (2), ledit canal d'alimentation (6) présente une section transversale qui est quasiment constante, présente une ouverture (7) qui se développe sur sa longueur correspondante, et est conformé de manière à contenir les comprimés (2) qui passent ;
le canal d'alimentation (6) conformant, en particulier : une paroi principale (11) ; une première paroi latérale (12) qui est raccordée à la paroi principale (11) ; une deuxième paroi latérale (13) qui est raccordée à la paroi principale (11) et qui est opposée à la première paroi latérale (12) ;
une première paroi auxiliaire (14) qui est raccordée à la première paroi latérale (12) et qui est opposée à la paroi principale (11) ; et une deuxième paroi auxiliaire (15) qui est raccordée à la deuxième paroi latérale (13) et qui est opposée à la paroi principale (11) ; la première paroi auxiliaire (14) et la deuxième paroi auxiliaire (15) délimitant l'ouverture (7) ;
l'unité (10) étant **caractérisée en ce que** :
le canal (6) d'alimentation de comprimés (2) est obtenu par fraisage, le fraisage étant effectué en utilisant une fraiseuse de rainures comprenant une queue et une tête ayant un profil de coupe qui est identique au profil extérieur de l'une des deux parties égales susmentionnées de la section transversale (17) de superficie maximale ;
la paroi principale (11), la première paroi latérale (12), la deuxième paroi latérale (13), la première paroi auxiliaire (14) et la deuxième paroi auxiliaire (15) sont conformées de manière à ce que la section transversale (16) du canal d'alimentation (6) présente un profil ayant la même forme que le profil de la section transversale (17) de superficie maximale du comprimé (2), de telle sorte que le comprimé (2) est guidé le long du canal d'alimentation (6).

2. Un procédé pour réaliser au moins un canal (6) d'alimentation de comprimés (2) dans un support (5) d'une unité (10) permettant de libérer des comprimés (2), chaque comprimé (2) ayant un axe longitudinal et une section transversale (17) de superficie maximale qui a un profil qui peut contenir le profil de toutes les autres sections transversales du comprimé (2) et qui a un axe de symétrie (A) qui divise ladite section transversale (17) de superficie maximale en deux parties égales, le procédé comprenant les phases consistant à :
réaliser au moins un canal (6) d'alimentation de comprimés (2) dans un support (5) d'une unité (10) permettant de libérer des comprimés (2), de manière à ce que le canal (6) d'alimentation de comprimés (2) présente une section transversale qui est quasiment constante, présente une ouverture (7) qui se développe sur sa longueur correspondante, soit conformé de manière à contenir les comprimés (2) qui passent, et conforme : une paroi principale (11) ; une première paroi latérale (12) qui est raccordée à la paroi principale (11) ; une deuxième paroi latérale (13) qui est raccordée à la paroi principale (11) et qui est opposée à la première paroi latérale (12) ; une première paroi auxiliaire (14) qui est raccordée à la première paroi latérale (12) et qui est opposée à la paroi principale (11) ; et une deuxième paroi auxiliaire (15) qui est raccordée à la deuxième paroi latérale (13) et qui est opposée à la paroi principale (11) ; la première paroi auxiliaire (14) et la deuxième paroi auxiliaire (15) délimitant l'ouverture (7) ;
le procédé étant **caractérisé en ce que** :
le canal d'alimentation (6) est réalisé par fraisage, le fraisage étant effectué en utilisant une fraiseuse de rainures comprenant une queue et une tête ayant un profil de coupe qui est identique au profil extérieur de l'une des deux parties égales susmentionnées de la section transversale (17) de superficie maximale,
de manière à ce que la section transversale (16) du canal d'alimentation (6) présente un profil ayant la même forme que la forme du profil de la section transversale (17) de superficie maximale du comprimé (2), de telle sorte que le comprimé (2) est guidé le long du canal d'alimentation (6).

3. Utilisation d'une fraiseuse de rainures pour réaliser au moins un canal (6) d'alimentation de comprimés (2) dans un support (5) d'une unité (10) permettant de libérer des comprimés (2), chaque comprimé (2) ayant un axe longitudinal et une section transversale (17) de superficie maximale qui a un profil qui peut contenir le profil de toutes les autres sections transversales du comprimé (2) et qui a un axe de symétrie (A) qui divise ladite section transversale (17) de superficie maximale en deux parties égales, la fraiseuse de rainures comprenant une queue et une tête ayant un profil de coupe qui est identique au profil extérieur de l'une des deux parties égales susmentionnées de la section transversale (17) de superficie maximale,
de manière à ce que le canal (6) d'alimentation de comprimés (2) :
présente une section transversale qui est quasiment constante ; présente une ouverture (7) qui se développe sur sa longueur correspondante ; soit conformé de manière à contenir les comprimés (2) qui passent ; et conforme une paroi principale (11), une première paroi latérale (12) qui est raccordée à la paroi principale (11), une deuxième paroi latérale (13) qui est raccordée à la paroi principale (11) et qui est opposée à la première paroi latérale (12) ; une première paroi auxiliaire (14) qui est raccordée à la première paroi latérale (12) et qui est opposée à la paroi principale (11) ; et une deuxième paroi auxiliaire (15) qui est raccordée à la deuxième paroi latérale (13) et qui est opposée à la paroi principale (11) ; la première paroi auxiliaire (14) et la deuxième paroi auxiliaire (15) délimitant l'ouverture (7) ;
et de manière à ce que la section transversale (16) du canal d'alimentation (6) présente un profil ayant la même forme que le profil de la section transversale (17) de superficie maximale des comprimés (2), de telle sorte que le comprimé (2) est guidé le long du canal d'alimentation (6).
